Europäisches Patentamt

European Patent Office

Office européen des brevets

(11) Veröffentlichungsnummer: **0 321 830 B1**

(12) **EUROPÄISCHE PATENTSCHRIFT**

(45) Veröffentlichungstag der Patentschrift: **09.06.93**

(51) Int. Cl.⁵: **C08L 33/08**, C08L 77/00

(21) Anmeldenummer: **88120787.2**

(22) Anmeldetag: **13.12.88**

Die Akte enthält technische Angaben, die nach dem Eingang der Anmeldung eingereicht wurden und die nicht in dieser Patentschrift enthalten sind.

(54) **Weiche, thermoplastisch verarbeitbare, Polyamid enthaltende Polymerlegierungen.**

(30) Priorität: **22.12.87 DE 3743486**

(43) Veröffentlichungstag der Anmeldung:
**28.06.89 Patentblatt 89/26**

(45) Bekanntmachung des Hinweises auf die Patenterteilung:
**09.06.93 Patentblatt 93/23**

(84) Benannte Vertragsstaaten:
**DE FR GB IT NL SE**

(56) Entgegenhaltungen:
**EP-A- 0 153 587**
**US-A- 4 174 358**

(73) Patentinhaber: **BAYER AG**

**W-5090 Leverkusen 1 Bayerwerk(DE)**

(72) Erfinder: **Lindner, Christian, Dr.**
**Riehler Strasse 200**
**W-5000 Köln 60(DE)**
Erfinder: **Meier, Lothar, Dr.**
**Buchenstrasse 31b**
**W-4322 Sprockhövel 2(DE)**
Erfinder: **Billinger, Otto, Dipl.-Ing.**
**Birkenstrasse 13**
**W-5460 Linz(DE)**
Erfinder: **Piejko, Karl-Erwin, Dr.**
**Unterscheider Weg 7a**
**W-5060 Bergisch Gladbach 2(DE)**

**Beschreibung**

Die Erfindung betrifft weiche, kautschukartige, thermoplastisch verarbeitbare Polymerlegierungen auf der Basis von 10 bis 50 Gew.-% (cyclo)aliphatischer, thermoplastischer Polyamide und 90 bis 50 Gew.-% spezieller, vernetzter, teilchenförmiger Alkylacrylatcopolymerkautschuke, die sich zur Herstellung gummiartiger, elastischer Formmassen eignen.

Gegenstand der Erfindung ist auch ein Verfahren zu ihrer Herstellung.

Flexible Polymermischungen auf der Basis von bestimmten Pfropfpolymerisaten und Acrylatcopolymerkautschuken sind bekannt und haben sich auf dem Gebiet thermoplastisch verarbeitbarer Elastomerer bewährt.

Aus der EP-A-153 587 sind elastomere thermoplastische Formmassen bekannt enthaltend A 5 bis 50 Vol.-Teile eines teilkristallinen thermoplastischen Polymeren und B 95 bis 50 Vol.-Teile eines in A dispergierten vernetzten kautschukelastischen Polymerisats. Die dort beschriebenen Formmassen weisen Dehnungen deutlich unter 100 % auf und sind mit Kautschukpolymerisaten mit einer Glastemperatur unter -10°C hergestellt. Zur Herstellung dieser Formmassen wird ein vergleichsweise hoher Anteil an Vernetzern eingesetzt (bevorzugt 5 bis 10 Gew.-%).

Polyamide dagegen, wie Polyamid-6 oder Polyamid-66, stellen andererseits technisch bedeutende Thermoplaste dar, die sich eigenschaftsmäßig durch Härte, Steifigkeit, gute praktische Wärmestandfestigkeit und hohe Stabilität gegen Lösungsmitteleinfluß auszeichnen.

Es zeigte sich nun überraschenderweise, daß man durch die Kombination von bevorzugt kleineren Anteilen derartiger Polyamide und bevorzugt überwiegenden Anteilen bestimmter, spezieller, vernetzter, partikelförmiger Acrylatkautschukcopoylmerer trotz der Anwesenheit des harten, nichtelastischen Polyamids und trotz des Einsatzes hochvernetzter Acrylatcopolymerkautschuke zu homogenen, weichen, flexiblen Polymerlegierungen (Polymermischungen) gelangen kann. Diese Polymerlegierungen besitzen hervorragende thermoplastische Verarbeitbarkeit, gute Lösungsmittelbeständigkeit, hohe Alterungsstabilität und insbesondere ein gutes Haftvermögen auf anderen Kunststoffmaterialien, insbesondere auf Polyamiden und Polyurethanen.

Gegenstand der Erfindung sind somit weiche, thermoplastisch verarbeitbare Polymerlegierungen mit elastischen Eigenschaften,

gekennzeichnet durch einen Gehalt von

a) 10 bis 50 Gew.-%, bevorzugt 10 bis 35 Gew.-% eines thermoplastischen, amorphen oder teilkristallinen, bevorzugt teilkristallinen, aliphatischen und/oder cycloaliphatischen Polyamids,

b) 90 bis 50 Gew.-%, bevorzugt 90 bis 65 Gew.-% eines teilvernetzten, teilchenförmigen Kautschukcopolymerisates aus

b1) mindestens 60 Gew.-%, vorzugsweise mindestens 65 Gew.-%, insbesondere 95 bis 60 Gew.-%, bezogen auf b), eines $C_2$-$C_8$-Alkylacrylats mit primären oder sekundären Alkylgruppen, und

b2) 4,45 bis 40 Gew.-%, bevorzugt 10 bis 35 Gew.-%, insbesondere 4,45 bis 33 Gew.-%, bezogen auf b), wenigstens eines Monomeren aus der Reihe Acrylnitril oder $C_1$-$C_6$-Alkylmethacrylate mit primären und/oder sekundären Alkylgruppen,

b3) 0 bis 10 Gew.-%, bevorzugt 0 bis 6 Gew.-%, insbesondere 0,5 bis 5 Gew.-%, wenigstens eines Monomeren aus der Reihe eines tertiären Alkyl(meth)acrylats, (Meth)Acrylsäure oder Maleinsäureanhydrid, sowie

b4) 0,05 bis 2 Gew.-%, eines vernetzend wirkenden Monomeren mit mindestens zwei olefinisch ungesättigten Gruppen,

wobei das Kautschukpolymerisat b) einen Gelgehalt von 20 bis 99 Gew.-%, bevorzugt 50 bis 99 Gew.-%, insbesondere von 70 bis 99 Gew.-%, und einen mittleren Teilchendurchmesser ($d_{50}$) von 0,09 bis 1,2 $\mu$m, bevorzugt 0,09 bis 0,8 $\mu$m und insbesondere von 0,1 bis 0,4 $\mu$m aufweist und eine Glastemperatur $T_G$ unter -10°C ausgeschlossen ist.

Die Polymerlegierungen können darüber hinaus übliche Zusätze in üblichen Mengen enthalten.

Als Polyamide a) im Sinne der Erfindung eignen sich amorphe und insbesondere teilkristalline, aliphatische und/oder cycloaliphatische Polyamide oder ihre Mischungen. So können als teilkristalline Polyamide für die erfindungsgemäßen Polymerlegierungen Polyamid-6, Polyamid-6,6 und Copolymere aus diesen beiden Komponenten eingesetzt werden. Weiterhin kommen beispielsweise teilkristalline Polyamide in Betracht, deren Säurekomponenten ganz oder teilweise aus geradkettigen oder verzweigten, aliphatischen oder cycloaliphatischen Dicarbonsäuren, z.B. aus Adipinsäure, Korksäure, Sebacinsäure und/oder Azelainsäure und/oder Cyclohexandicarbonsäuren, und deren Diaminkomponente aus geradkettigen oder verzweigten, aliphatischen oder cycloaliphatischen Diaminen, beispielsweise aus Hexamethylendiamin und/oder 2,2,4-Trimethylhexamethylendiamin und/oder 2,4,4-Trimethylhexamethylendiamin und/oder Isopho-

EP 0 321 830 B1

rondiamin besteht. Die Herstellungsmethoden und Zusammensetzungen solcher Polyamide sind aus dem Stand der Technik bekannt. Außerdem sind Polyamide zu nennen, die ganz oder teilweise aus Lactamen mit 4 bis 12 C-Atomen, gegebenenfalls unter Mitverwendung einer oder mehrerer der obengenannten Diamin- oder Dicarbonsäureausgangskomponenten, hergestellt werden.

Als amorphe Polyamide können die gemäß Stand der Technik bekannten Produkte eingesetzt werden. Sie werden erhalten durch Polykondensation von aliphatischen und/oder cycloaliphatischen Diaminen wie 2- oder 3-Methyl-hexandiamin-1,6, Propylendiamin, Hexamethylendiamin, Decamethylendiamin, 2,2,4-und/oder 2,4,4-Trimethylhexamethylendiamin, Bis-(4- aminocyclohexyl)-methan, Bis-(4-aminocyclohexyl)-propan, 3,3'-Dimethyl-4,4'-diaminodicyclohexylmethan, 3-Aminomethyl-3,5,5-trimethyl-cyclohexylamin und seinen Isomeren (Isophorondiamin), 2,5-und/oder 2,6-Bis-(aminomethyl)-norbornan und/oder 1,4-Dimethylcyclohexan, mit aliphatischen und/oder cycloaliphatischen Dicarbonsäuren wie Oxalsäure, Adipinsäure, Methyladipinsäure, Azelainsäure, Decandicarbonsäure, Heptadecandicarbonsäure, sogenannten Dimersäuren, 2,2,4- und/oder 2,4,4-Trimethyladipinsäure.

Selbstverständlich können auch Copolymere, die durch Polykondensation mehrerer Monomerer erhalten werden, eingesetzt werden, ferner solche Copolymere, die unter Zusatz von Aminocarbonsäuren wie $\epsilon$-Aminocapronsäure, $\omega$-Aminoundecansäure oder $\omega$-Aminolaurinsäure oder ihren Lactamen, hergestellt werden.

Besonders bevorzugte Polyamide auf Basis Lactamen oder Aminocarbonsäuren sind Polyamid-6, Polyamid-66, Polyamid-11 und Polyamid-12, davon insbesondere Polyamid-12 und das Polyamid-6.

Polymerisate b) im Sinne der Erfindung sind teilvernetzte, teilchenförmige Kautschukcopolymerisate aus

b1) den genannten Mengen eines primären oder sekundären $C_2$-$C_8$-Alkylacrylates, wie Ethyl-, Propyl-, n-Butyl-, iso-Butyl oder n-Hexylacrylat,

b2) den genannten Mengen wenigstens eines Monomeren aus der Reihe Acrylnitril und $C_1$-$C_6$-Alkylmethacrylat, insbesondere Methylmethacrylat, bevorzugt jedoch Acrylnitril, und

b3) den genannten Mengen eines tertiären Alkyl(meth)acrylats, insbesondere tert.-Butyl-acrylat, (Meth)-Acrylsäure oder Maleinsäureanhydrid,

(b4) gegebenenfalls den angegebenen Mengen einer zweifach oder höherfunktionellen ungesättigten Verbindung als vernetzende Monomere.

Als vernetzende Monomere b4) sind Alkylmethacrylat, Ethylenglykoldimethacrylat, Diallylphthalat und heterocyclische Verbindungen, die mindestens 3 copolymerisierbare, ethylenisch ungesättigten Doppelbindungen aufweisen, bevorzugt. Besonders bevorzugte, vernetzende Monomere sind die cyclischen Monomeren Triallylcyanurat, Triallylisocyanurat, Trivinylcyanurat, Trisacryloylhexahydro-s-triazin und die Triallylbenzole.

Die Menge der vernetzenden Monomeren beträgt insbesondere 0,05 bis 2 Gew.-%, bezogen auf Kautschukcopolymerisat b). Bei cyclischen, vernetzenden Monomeren mit mindestens 3 ethylenisch ungesättigten Doppelbindungen ist es vorteilhaft, nich mehr als 1 Gew.-%, bezogen auf Kautschukcopolymerisat, zu verwenden.

Die Kautschukcopolymerisate d) besitzen Gelgehalte von 20 bis 99 Gew.-% und kleine mittlere Teilchendurchmesser ($d_{50}$) vorzugsweise von 0,09 bis 0,8 $\mu$m.

Die Herstellung der Komponente b) kann in bekannter Weise erfolgen, z.B. durch radikalische, wäßrige Emulsionspolymerisation in Gegenwart anionischer, oberflächenaktiver Stoffe, insbesondere im Temperaturbereich von 40 bis 95°C, bevorzugt bei 55 bis 80°C. Für den Fall, daß keine vernetzenden Monomeren b4) mitverwendet werden, können die Kautschukcopolymerisate nachträglich in an sich bekannter Art vernetzt werden, z.B. durch Peroxidbehandlung oder durch Strahlenvernetzung.

Bevorzugte, erfindungsgemäße Polymerlegierungen enthalten als Komponente a) Polyamid-6, Polyamid-12, Polyamid-11 oder Polyamid-66, insbesondere aber Polyamid-12 und als kautschukartige Copolymerisatkomponente solche aus Alkylacrylat (b1) und Acrylnitril (b2), hergestellt durch Polymerisation unter Vernetzung mittels Copolymerisation mit einem Anteil (b4) trifunktionellen Allylverbindungen, insbesondere von Triallylcyanurat. Derartige Polymerlegierungen weisen eine hohe Vernetzung auf (mit Gelgehalten größer 70 Gew.-%, insbesondere größer 85 Gew.-%).

Die Polymerlegierungen können gegebenenfalls übliche Zusatzstoffe, wie sie aus dem Stand der Technik grundsätzlich bekannt sind, z.B. Gleitmittel, Pigmente, Antioxidantien oder beliebige Stabilisatoren, Füllstoffe oder Verstärkungsfasern, oder auch Polyamidweichmacher, enthalten. Beispiele sind Weichmacher aus der Reihe der Sulfonamide, der Bisphenole oder der halogenierten Aromaten.

Die Herstellung der Mischungen (Legierungen) kann auf üblichen Wegen erfolgen, indem die aus ihrer Emulsion durch übliche Koagulationsverfahren und beispielsweise Direkt-Trocknungsverfahren (Sprühtrocknung) isolierten und gegebenenfalls gereinigten Polymerkomponenten b) mittels bekannten

3

EP 0 321 830 B1

Compoundiareggregaten wie Knetern, Schnecken oder Walzen bei erhöhten Temperaturen mit den Polyamidkomponenten a) und gegebenenfalls weiteren Zusatzkomponenten und Additiven der oben als Zusatzstoffe genannten Art vermischt werden.

Gegenstand der Erfindung ist auch ein Verfahren zur Herstellung von weichen, thermoplastisch verarbeitbaren Polymerlegierungen mit elastischen Eigenschaften durch Vermischen zweier Komponenten mittels bekannter Compoundieraggregate bei erhöhten Temperaturen in der Schmelze, dadurch gekennzeichnet, daß man

a) 10 bis 50 Gew.-%, bevorzugt 10 bis 35 Gew.-%, eines thermoplastischen, amorphen oder teilkristallinen aliphatischen Polyamids, bevorzugt eines teilkristallinen aromatischen Polyamids, insbesondere Polyamid-6, Polyamid-66, Polyamid-11 und/oder Polyamid-12

mit

b) 90 bis 50 Gew.-%, bevorzugt 90 bis 65 Gew.-%, eines teilvernetzten, teilchenförmigen Kautschukpolymerisates aus

b1) mindestens 60 Gew.-%, vorzugsweise mindestens 65 Gew.-%, insbesondere 95 bis 60 Gew.-%, bezogen auf b) eines primären $C_2$-$C_8$-Alkylacrylats mit primären oder sekundären Alkylgruppen,

b2) 4,45 bis 40 Gew.-%, bevorzugt 10 bis 35 Gew.-%, insbesondere 4,45 bis 33 Gew.-%, bezogen auf b), wenigstens eines Monomeren aus der Reihe Acrylnitril oder $C_1$-$C_6$-Alkylmethacrylate mit primären und/oder sekundären Alkylgruppen,

b3) 0 bis 10 Gew.-%, bevorzugt 0 bis 6 Gew.-%, insbesondere 0,5 bis 5 Gew.-%, wenigstens eines Monomeren aus der Reihe eines tertiären Alkyl(meth)acrylats, (Meth)Acrylsäure oder Maleinsäureanhydrid, sowie

b4) 0,05 bis 2 Gew.-% eines vernetzend wirkenden Monomeren mit mindestens zwei olefinisch ungesättigten Gruppen,

wobei das Kautschukpolymerisat b) einen Gelgehalt von 20 bis 99 Gew.-%, bevorzugt 55 bis 99 Gew.-%, insbesondere von 70 bis 99 Gew.-%, und einen mittleren Teilchendurchmesser ($d_{50}$) von 0.09 bis 1,2 $\mu$m, bevorzugt 0,09 bis 0,8 $\mu$m und insbesondere von 0,1 bis 0,4 $\mu$m aufweist und eine Glastemperatur $T_G$ unter -10 °C ausgeschlossen ist,

vermischt.

Formmassen aus diesen erfindungsgemäßen Polymerlegierungen besitzen viele Eigenschaften sowohl üblicher Kautschukpolymerisate oder auch thermoplastischer Elastomere gemeinsam; hervorzuheben ist ihre besondere Eigenschaftskombination von Dehnungsverhalten, Weichheit und Festigkeit. So zeigen sie insbesondere eine Kombination hoher Zugfestigkeit, bevorzugt >5 MPa, insbesondere ≥10 MPa, eine hohe, weitgehend reversible Dehnung, bevorzugt von >80 %, insbesondere ≥100 %, eine beachtliche Weiterreißfestigkeit, bevorzugt von >25 MPa, insbesondere ≥37 MPa und eine beachtliche Shore-Härte A/D, bevorzugt von >70/15, insbesondere ≥80/25. Je nach Mengenanteil von a) und b) lassen sich diese mechanischen Eigenschaften variieren und in besonders günstiger Weise läßt sich die Kältefestigkeit (z.B. im Vergleich zu weichgemachten PVC-Folien) modifizieren und verbessern.

Da die Komponente b) ein hochvernetztes Copolymeres darstellt, besitzen die aus der Polymerlegierung hergestellten Formmassen äußerst niedrige Anteile an flüchtigen oder migrierenden Verunreinigungen im Vergleich zu bekannten Formmassen mit kautschukelastischen Eigenschaften, z.B. weichgemachtem PVC oder Polyamid. Hervorzuheben sind weiterhin die besondere Unempfindlichkeit gegenüber technisch relevanten Lösungsmittelsystemen und ihre hohe Alterungsbeständigkeit. Die Polymerlegierungen eignen sich zur Herstellung von Beschichtungen, Dichtungsmassen, Folien, Dämpfungsmaterialien und Gummiartikeln.

Beispiele

1) Eingesetzte Polyamide a)

1.1) Polyamid-12 mit einer relativen Lösungsviskosität (in m-Kresol bei 0,5 g/100 ml bei 25 °C) von 2,1 (Vestamid® L 2122 P - Hüls AG, Marl)
1.2) Polyamid-12 mit einer relativen Lösungsviskosität (in m-Kresol bei 0,5 g/100 ml bei 25 °C) von 1,63 (Vestamid® WS)
1.3) Polyamid-6 mit einer relativen Lösungsviskosität von 3,1 (als 1 %ige Lösung in m-Kresol bei 25 °C) (Durethan® B 31 F - BAYER AG, D-5090 Leverkusen)

4

2) Eingesetzte Komponenten b)

2.1) Kautschukcopolymerisat im Sinne der Erfindung

In einem Reaktor wird eine Lösung von 2,5 Gew.-Teilen Na-Salz von $C_{14}$-$C_{18}$-Alkylsulfonsäuren in 750 Gew.-Teilen Wasser vorgelegt. Nach Aufheizen auf 70°C gibt man 70 Gew.-Teile der Monomerlösung A) hinzu und initiiert die Polymerisation durch Zugabe einer Lösung von 3,5 Gew.-Teilen Kaliumperoxidsulfat in 50 Gew.-Teilen Wasser. Bei 70°C dosiert man den Rest der Lösung A) sowie die Lösung B) gleichmäßig innerhalb von 6 Stunden in den Reaktor ein und polymerisiert innerhalb von 4 Stunden aus. Es wird ein Latex mit einem Polymerfeststoffgehalt von 37 Gew.-%, einem mittleren Teilchendurchmesser ($d_{50}$) von 0,18 μm und einem Gelgehalt (in DMF) von 98 Gew.-% erhalten.
Lsg. A: 1105 Gew.-Teile n-Butylacrylat (b1)
7 Gew.-Teile Triallylcyanurat (b4)
474 Gew.-Teile Acrylnitril (b2)
Lsg. B: 30 Gew.-Teile Na-Salz von $C_{14}$-$C_{18}$-Alkylsulfonsäuren
1790 Gew.-Teile Wasser

2.2) Kautschukcopolymerisat im Sinne der Erfindung

Es wird ein Kautschukcopolymerisat aus n-Butylacrylat, Acrylnitril, Triallylcyanurat und tert.-Butylacrylat hergestellt, indem man nach Vorschrift 2.1) als Lösung A polymerisiert:
Lsg. A: 1030 Gew.-Teile n-Butylacrylat (b1)
7 Gew.-Teile Triallylcyanurat (b4)
474 Gew.-Teile Acrylnitril (b2)
75 Gew.-Teile tert.Butylacrylat(b3)
(Lsg. B: wie bei 2.1)
Es wird ein Latex mit einem Polymerfeststoff von 37 Gew.-%, einem mittleren Teilchendurchmesser ($d_{50}$) von 0,16 μm und einem Gelgehalt (in DMF) von 97 Gew.-% erhalten.

2.3) Kautschukpolymerisat zum Vergleich

In einem Reaktor wird eine Lösung von 5 Gew.-Teilen Na-Salz von $C_{14}$-$C_{18}$-Alkylsulfonsäuren in 1030 Gew.-Teilen Wasser vorgelegt. Nach Aufheizen auf 70°C gibt man 80 Gew.-Teile Monomerlösung A) hinzu und initiiert die Polymerisation durch Zugabe einer Lösung von 4 Gew.-Teilen Kaliumperoxidisulfat in 100 Gew.-Teilen Wasser. Bei 70°C dosiert man den Rest der Lösung A) sowie die Lösung B) gleichmäßig innerhalb von 5 Stunden in den Reaktor ein und polymerisiert innerhalb von 4 Stunden aus. Es wird ein Latex mit einem Polymerfeststoffgehalt von 30 Gew.-%, einem mittleren Teilchendurchmesser ($d_{50}$) von 0,20 μm und einem Gelgehalt (in DMF) von 95 Gew.-% erhalten.
Lsg. A: 995 Gew.-Teile n-Butylacrylat (b1)
5 Gew.-Teile Triallylcyanurat (b4)
Lsg. B: 25 Gew.-Teile Na-Salz von $C_{14}$-$C_{18}$-Alkylsulfonsäuren
700 Gew.-Teile Wasser
Zur Messung der mittleren Teilchendurchmesser $d_{(50)}$ siehe W. Scholtan u. H. Lange, Kolloid-Zeitschrift und Z. für Polymere, 250 (1972), S. 787-796.
Zur Messung des Gelgehaltes in DMF wurden aus 0,5%igen Lösungen in Tetrahydrofuran bei 25°C der Gelanteil mittels Ultrazentrifuge abgetrennt und nach Trocknung ausgewogen (vgl. M. Hoffmann et al, Polymeranalytik, Georg Thieme-Verlag, Stuttgart, 1977, S. 172, 289 - Teil A und S. 341 Teil B.).

3) Herstellung und Eigenschaften der Polymerlegierungen

Die Latices 2) werden nach Stabilisierung mit 1 Gew.-% (bezogen auf Polymerisatgehalt) phenolischer Antioxidantien mit wäßriger Magnesiumsulfat-Lösung koaguliert, gewaschen und bei 70°C getrocknet.
Die Komponenten a) und b) werden zu Polymerlegierungen 3.1 bis 3.5 (siehe Tabelle 1) auf einer Walze bei 230°C 5 Minuten lang compoundiert; dabei werden als Verarbeitungshilfsmittels 2,8 Gew.-% Esterwachs (Hoechstwachs®-C, Hoechst AG, Frankfurt-Hoechst, Bundesrepublik Deutschland) zugeführt. Danach wird das gebildete Walzfell bei 240°C zu Prüfkörpern verpreßt. In Tabelle 2 ist der Eigenschaftsvergleich wiedergegeben.

Tabelle 1

| Zusammensetzung der Polymerkompositionen (Angaben in Gew.-%) | | | | | | |
|---|---|---|---|---|---|---|
| Lfd.Nr. | Komponente a) | | | Komponente b) | | |
| | Typ | | | Typ | | |
| | 1.1 | 1.2 | 1.3 | 2.1 | 2.2 | 2.3 Vergl. |
| 3.1 | 25 | | | 75 | | |
| 3.2 | 25 | | | | 75 | |
| 3.3(Vergl.) | 25 | | | | | 75 |
| 3.4 | | 25 | | 75 | | |
| 3.5 | | | 25 | 75 | | |

Tabelle 2   Eigenschaftsvergleich

| Lfd. Nr. | Zugfestigkeit (MPa) | Dehnung $\varepsilon_R$(%) | Weiterreißfestigkeit (MPa) | Shore Härte A/D |
|---|---|---|---|---|
| 3.1 | 10 | 211 | 36 | 82/28 |
| 3.2 | 11 | 220 | 40 | 83/31 |
| 3.3 | 0,8 | 22 | 4 | 42/ 0 (Vergleich) |
| 3.4 | 10 | 190 | 37 | 80/25 |
| 3.5 | 11 | 100 | 42 | 84/30 |

Prüfmethodik

Zugfestigkeit          nach DIN 53 455
Dehnung                nach DIN 53 455

Weiterreißfestigkeit     nach DIN 53 315
Shore Härte           nach DIN 53 505

**Patentansprüche**

1. Weiche, thermoplastisch verarbeitbare Polymerlegierungen mit elastischen Eigenschaften, gekennzeichnet durch einen Gehalt von

     a) 10 bis 50 Gew.-% eines thermoplastischen, amorphen oder teilkristallinen aliphatischen und/oder cycloaliphatischen Polyamids,

     b) 90 bis 50 Gew.-% eines teilvernetzten, teilchenförmigen Kautschukcopolymerisates aus

         b1) mindestens 60 Gew.-%,bezogen auf b), eines $C_2$- $C_8$-Alkylacrylats mit primären oder sekundären Alkylgruppen,

         b2) 4.45 bis 40 Gew.-%, bezogen auf b), wenigstens eines Monomeren aus der Reihe Acrylnitril oder $C_1$-$C_6$ Alkylmethacrylate mit primären und/oder sekundären Alkylgruppen,

         b3) 0 bis 10 Gew.-% wenigstens eines Monomeren aus der Reihe eines tertiären Alkyl(meth)-acrylats, (Meth)Acrylsäure oder Maleinsäureanhydrid sowie

         b4) 0,05 bis 2 Gew.-% eines vernetzend wirkenden Monomeren mit mindestens zwei olefinisch ungesättigten Gruppen,

     wobei das Kautschukcopolymerisat b) einen Gelgehalt von 20 bis 99 Gew.-% und einen mittleren Teilchendurchmesser d(50) von 0,09 bis 1,2 $\mu$m aufweist und eine Glastemperatur Tg unter -10°C ausgeschlossen ist.

2. Polymerlegierungen nach Anspruch 1), gekennzeichnet durch einen Gehalt von

     a) 10 bis 35 Gew.-% eines teilkristallinen aliphatischen und/ oder cycloaliphatischen Polyamids und

     b) 90 bis 65 Gew.-% eines teilvernetzten, teilchenförmigen Kautschukcopolymerisates.

3. Polymerlegierungen nach Ansprüchen 1) und 2), gekennzeichnet durch ein Kautschukcopolymerisat b) aus

     b1) mindestens 60 Gew.-% ,bezogen auf b), eines $C_2$-$C_8$-Alkylacrylats mit primären oder sekundären Alkylgruppen,

     b2) 4,45 bis 33 Gew.-%, bezogen auf b), wenigstens eines Monomeren aus der Reihe Acrylnitril oder $C_1$-$C_6$-Alkylmethacrylate mit primären und/oder sekundären Alkylgruppen,

     b3) 0,5 bis 5 Gew.-% wenigstens eines Monomeren aus der Reihe eines tertiären Alkyl(meth)-acrylats,(Meth)Acrylsäure oder Maleinsäureanhydrid sowie

     b4) 0,05 bis 2 Gew.-% eines vernetzend wirkenden Monomeren mit mindestens zwei olefinisch ungesättigten Gruppen,

     wobei das Kautschukcopolymerisat b) einen Gelgehalt von 50 bis 99 Gew.-% und einen mittleren Teilchendurchmesser (d50) von 0,09 - 0,8 $\mu$m aufweist und eine Glastemperatur Tg unter - 10°C ausgeschlossen ist.

4. Polymerlegierungen nach Ansprüchen 1) bis 3), wobei das Kautschukcopolymerisat b) einen Gelgehalt von 70 bis 99 Gew.-% und einen mittleren Teilchendurchmesser d(50) von 0,1 bis 0,4 $\mu$m aufweist und eine Glastemperatur (Tg) unter -10°C ausgeschlossen ist.

5. Polymerlegierungen nach Ansprüchen 1) bis 4), wobei die Polymerlegierung eine Dehnung von mindestens 100% aufweist.

6. Verfahren zur Herstellung von weichen, thermoplastisch verarbeitbaren Polymerlegierungen mit elastischen Eigenschaften durch Vermischen zweier Komponenten mitels bekannter Compoundieraggregate bei erhöhten Temperaturen in der Schmelze, dadurch gekennzeichnet, daß man

     a) 10 bis 50 Gew.% eines thermoplastischen, amorphen oder teilkristallinen aliphatischen Polyamids mit

     b) 90 bis 50 Gew.-% eines teilchenförmigen, teilvernetzten Copolymerisates aus

         b1) mindestens 60 Gew.-%, bezogen auf b), eines $C_2$-$C_8$-Alkylacrylats mit primären oder sekundären Alkylgruppen,

         b2) 4,45 bis 40 Gew.-%, bezogen auf b), wenigstens eines Monomeren aus der Reihe Acrylnitril oder $C_1$-$C_6$-Alkylmethacrylate mit primären und/oder sekundären Alkylgruppen,

b3) 0 bis 10 Gew.-% wenigstens eines Monomeren aus der Reihe eines tertiären Alkyl(meth)-acrylats, (Meth)Acrylsäure oder Maleinsäureanhydrid sowie

b4) 0,05 bis 2,0 Gew.-% eines vernetzend wirkenden Monomeren mit mindestens zwei olefinisch ungesättigten Gruppen,

wobei das Kautschukcopolymerisat b) einen Gelgehalt von 20 bis 99 Gew.-% und einen mittleren Teilchendurchmesser d(50) von 0,09 - 1,2 $\mu$m aufweist und wobei Kaintschukcopolymerisate mit einer Glastemperatur unter -10°C ausgeschlossen sind.

7. Verfahren nach Anspruch 6, dadurch gekennzeichnet, daß

a) 10 bis 35 Gew.% eines teilkristallinen aliphatischen Polyamids und

b) 90 bis 65 Gew.-% eines teilvernetzten,teilchenförmigen Kautschukcopolymerisates vermischt werden.

8. Verfahren nach Ansprüchen 6 und 7, dadurch gekennzeichnet, daß als Kautschukcopolymerisat ein solches nach Anspruch 3 vermischt wird.

9. Verfahren nach Ansprüchen 6) bis 8) dadurch gekennzeichnet, daß ein Kautschukcopolymerisat b) nach Anspruch 4 vermischt wird.

10. Verfahren nach Ansprüchen 6) bis 9), dadurch gekennzeichnet, daß als Polyamid a) Polyamid 66, Polyamid 6, Polyamid 11 und/oder Polyamid 12 vermischt wird.

**Claims**

1. Soft, thermoplastically processible polymer alloys with elastic properties, characterised by containing

a) from 10 to 50% by weight of a thermoplastic, amorphous or partially crystalline aliphatic and/or cycloaliphatic polyamide,

b) from 90 to 50% by weight of a partially cross-linked, particulate rubber copolymer of

b1) at least 60% by weight, based on b), of a $C_2$-$C_8$-alkylacrylate having primary or secondary alkyl groups,

b2) from 4.45 to 40% by weight, based on b), of at least one monomer selected from acrylonitrile or $C_1$-$C_6$-alkylmethacrylates having primary and/or secondary alkyl groups,

b3) from 0 to 10% by weight of at least one monomer selected from a tertiary alkyl(meth)acrylate, (meth)acrylic acid or maleic acid anhydride and

b4) from 0.05 to 2% by weight of a cross-linking monomer having at least two olefinically unsaturated groups,

the rubber copolymer b) having a gel content of from 20 to 99% by weight and an average particle diameter d(50) of from 0.09 to 1.2 $\mu$m and a glass temperature Tg below -10°C being excluded.

2. Polymer alloys according to Claim 1, characterised by containing

a) from 10 to 35% by weight of a partially crystalline aliphatic and/or cycloaliphatic polyamide and

b) from 90 to 65% by weight of a partially cross-linked, particulate rubber copolymer.

3. Polymer alloys according to Claims 1 and 2, characterised by a rubber copolymer b) of

b1) at least 60% by weight, based on b), of a $C_2$-$C_8$-alkylacrylate having primary or secondary alkyl groups,

b2) from 4.45 to 33% by weight, based on b), of at least one monomer selected from acrylonitrile and $C_1$-$C_6$-alkylmethacrylates having primary and/or secondary alkyl groups,

b3) from 0.5 to 5% by weight of at least one monomer selected from a tertiary alkyl (meth)acrylate, (meth)acrylic acid and maleic acid anhydride and

b4) from 0.05 to 2% by weight of a cross-linking monomer having at least two olefinically unsaturated groups,

the rubber copolymer b) having a gel content of from 50 to 99% by weight and an average particle diameter (d50) of from 0.09 to 0.8 $\mu$m and a glass temperature Tg below -10°C being excluded.

4. Polymer alloys according to Claims 1) to 3) in which the rubber copolymer b) has a gel content of from 70 to 99% by weight and an average particle diameter d(50) of from 0.1 to 0.4 $\mu$m and a glass temperature (Tg) below -10°C is excluded.

EP 0 321 830 B1

**5.** Polymer alloys according to Claims 1 to 4, the polymer alloy having an elongation of at least 100%.

**6.** A process for the production of soft, thermoplastically processible polymer alloys with elastic properties by mixing two components by means of known compounding apparatus at elevated temperatures in the melt, characterised in that

a) from 10 to 50% by weight of a thermoplastic, amorphous or partially crystalline aliphatic polyamide (is mixed with)

b) from 90 to 50% by weight of a particulate, partially cross-linked copolymer of

b1) at least 60% by weight, based on b), of a $C_2$-$C_8$-alkylacrylate having primary or secondary alkyl groups,

b2) from 4.45 to 40% by weight, based on b), of at least one monomer selected from acrylonitrile and $C_1$-$C_6$-alkylmethacrylates having primary and/or secondary alkyl groups,

b3) from 0 to 10% by weight of at least one monomer selected from a tertiary alkyl (meth)-acrylate, (meth)acrylic acid and maleic acid anhydride and

b4) from 0.05 to 2.0% by weight of a cross-linking monomer having at least two olefinically unsaturated groups,

the rubber copolymer b) having a gel content of from 20 to 99% by weight and an average particle diameter d(50) of from 0.09 - 1.2 $\mu$m, rubber copolymers having a glass temperature below -10°C being excluded.

**7.** A process according to Claim 6, characterised in that

a) from 10 to 35% by weight of a partially crystalline aliphatic polyamide and

b) from 90 to 65% by weight of a partially cross-linked, particulate rubber copolymer are mixed together.

**8.** A process according to Claims 6 and 7, characterised in that the rubber copolymer which is intermixed is one according to Claim 3.

**9.** A process according to Claims 6 to 8, characterised in that a rubber copolymer b) according to Claim 4 is intermixed.

**10.** A process according to Claims 6 to 9, characterised in that the polyamide a) which is intermixed is Polyamide 66, Polyamide 6, Polyamide 11 and/or Polyamide 12.

**Revendications**

**1.** Alliages souples de polymères susceptibles de mise en oeuvre thermoplastique, doués de propriétés élastiques, caractérisés par une teneur

a) de 10 à 50 % en poids d'un polyamide aliphatique et/ou cycloaliphatique thermoplastique, amorphe ou partiellement cristallin,

b) de 90 à 50 % en poids d'un copolymère de type caoutchouc partiellement réticulé en particules, constitué

b1) d'au moins 60 % en poids, par rapport à b), d'un acrylate d'alkyle en $C_2$ à $C_8$ portant des groupes alkyle primaires ou secondaires,

b2) de 4,45 à 40 % en poids, par rapport à b), d'au moins un monomère de la série de l'acrylonitrile ou des méthacrylates d'alkyle en $C_1$ à $C_6$ portant des groupes alkyle primaires et/ou secondaires,

b3) de 0 à 10 % en poids d'au moins un monomère de la série d'un (méth)acrylate d'alkyle tertiaire, de l'acide (méth)acrylique ou de l'anhydride d'acide maléique, ainsi que

b4) de 0,05 à 2 % en poids d'un monomère à action réticulante portant au moins deux groupes à non-saturation oléfinique, le copolymère de type caoutchouc b) ayant une teneur en gel de 20 à 99 % en poids et un diamètre moyen d(50) des particules de 0,09 à 1,2 $\mu$m, une température Tg de transition vitreuse inférieure à -10°C étant exclue.

**2.** Alliages de polymères suivant la revendication 1, caractérisés par une teneur

a) de 10 à 35 % en poids d'un polyamide aliphatique et/ou cycloaliphatique partiellement cristallin et

b) de 90 à 65 % en poids d'un copolymère de type caoutchouc partiellement réticulé, sous forme de particules.

10

3. Alliages de polymères suivant les revendications 1 et 2, caractérisés par un copolymère du type caoutchouc b) constitué

b1) d'au moins 60 % en poids, par rapport à b), d'un acrylate d'alkyle en $C_2$ à $C_8$ portant des groupes alkyle primaires ou secondaires,

b2) de 4,45 à 33 % en poids, par rapport à b), d'au moins un monomère de la série de l'acrylonitrile ou de méthacrylates d'alkyle en $C_1$ à $C_6$ portant des groupes alkyle primaires et/ou secondaires,

b3) de 0,5 à 5 % en poids d'au moins un monomère de la série d'un (méth)acrylate d'alkyle tertiaire, de l'acide (méth)acrylique ou de l'anhydride d'acide maléique ainsi que

b4) de 0,05 à 2 % en poids d'un monomère à action réticulante portant au moins deux groupes à non-saturation oléfinique,

le copolymère du type caoutchouc b) présentant une teneur en gel de 50 à 99 % en poids et un diamètre moyen (d50) des particules de 0,09 à 0,8 μm, et une température Tg de transition vitreuse inférieure à -10°C étant exclue.

4. Alliages de polymères suivant les revendications 1 à 3, dans lesquels le copolymère du type caoutchouc b) présente une teneur en gel de 70 à 99 % en poids et un diamètre moyen d(50) des particules de 0,1 à 0,4 μm et une température (Tg) de transition vitreuse inférieure à -10°C est exclue.

5. Alliages de polymères suivant les revendications 1 à 4, présentant un allongement d'au moins 100 %.

6. Procédé de production d'alliages souples de polymères susceptibles de mise en oeuvre thermoplastique, doués de propriétés élastiques, par mélange de deux composants au moyen d'appareils connus de formulation, à l'état fondu à des températures élevées, caractérisé en ce qu'on mélange

a) 10 à 50 % en poids d'un polyamide aliphatique thermoplastique, amorphe ou partiellement cristallin avec

b) 90 à 50 % en poids d'un copolymère partiellement réticulé en particules, constitué

b1) d'au moins 60 % en poids, par rapport à b), d'un acrylate d'alkyle en $C_2$ à $C_8$ portant des groupes alkyle primaires ou secondaires,

b2) de 4,45 à 40 % en poids, par rapport à b), d'au moins un monomère de la série de l'acrylonitrile ou de méthacrylates d'alkyle en $C_1$ à $C_6$ portant des groupes alkyle primaires et/ou secondaires,

b3) de 0 à 10 % en poids d'au moins un monomère de la série d'un (méth)acrylate d'alkyle tertiaire, de l'acide (méth)acrylique ou de l'anhydride d'acide maléique ainsi que

b4) de 0,05 à 2,0 % en poids d'un monomère à action réticulante portant au moins deux groupes à non-saturation oléfinique,

le copolymère du type caoutchouc b) ayant une teneur en gel de 20 à 99 % en poids et un diamètre moyen d(50) des particules de 0,09 à 1,2 μm et des copolymères du type caoutchouc ayant une température de transition vitreuse inférieure à -10°C étant exclue.

7. Procédé suivant la revendication 6, caractérisé en ce qu'on mélange

a) 10 à 35 % en poids d'un polyamide aliphatique partiellement cristallin et

b) 90 à 65 % en poids d'un copolymère du type caoutchouc partiellement réticulé, en particules.

8. Procédé suivant les revendications 6 et 7, caractérisé en ce qu'on mélange comme copolymère du type caouchouc un copolymère suivant la revendication 3.

9. Procédé suivant les revendications 6 à 8, caractérisé en ce qu'on mélange un copolymère du type caoutchouc b) selon la revendication 4.

10. Procédé suivant les revendications 6 à 9, caractérisé en ce qu'on mélange comme polyamide a) du Polyamide 66, du Polyamide 6, du Polyamide 11 et/ou du Polyamide 12.

11